# EUROPÄISCHE PATENTSCHRIFT

(11) **EP 3 600 921 B1**
(45) Veröffentlichungstag und Bekanntmachung des Hinweises auf die Patenterteilung: **26.05.2021**
(21) Anmeldenummer: 18707268.1
(22) Anmeldetag: 09.02.2018
(51) Int. Cl.: B60G 3/20, B62D 7/06, B62D 7/12, B60G 15/06, B60G 3/06, B62D 5/04

(54) **RADAUFHÄNGUNG**
WHEEL SUSPENSION
SUSPENSION DE ROUE

(30) Priorität: 29.03.2017 DE 102017106810
(43) Veröffentlichungstag der Anmeldung: 05.02.2020
(73) Patentinhaber: Emm! solutions GmbH, 71263 Weil der Stadt (DE)
(72) Erfinder: RIEDEL, Max, 73547 Lorch (DE)
(74) Vertreter: Meyer zu Bexten, Elmar
(86) Internationale Anmeldenummer: PCT/EP2018/053333
(87) Internationale Veröffentlichungsnummer: WO 2018/177642

(56) Entgegenhaltungen:
- WO-A1-2016/039312
- WO-A1-2018/130475
- DE-A1-102015 209 595
- JP-A- H01 172 066
- JP-A- 2009 090 698

## Beschreibung

Die Erfindung betrifft eine Radaufhängung, insbesondere für ein Fahrzeugfahrwerk, mit einem ein Rad tragenden, eine erste Lenkachse für das Rad aufweisenden Achsschenkel, wobei die erste Lenkachse einen Radeinschlag in einem vorgegebenen Bereich erlaubt, und mit Komponenten zur Verbindung des Achsschenkels mit einer Tragstruktur.

Derzeit werden in der Fahrzeugtechnik vorwiegend Standard-Fahrwerke eingesetzt, die sich in ihrer individuellen Geometrie an den spezifischen Lastenheftanforderungen des jeweiligen Fahrzeugmodells orientieren.

Bekannte Radaufhängungen Automobile/Nutzfahrzeuge sind beispielsweise:
McPerson, radführendes Federbein mit zusätzlichem Querlenker Doppelquerlenker (auch Dreieckslenker) als Großbasis oder Kleinbasis
Mehrlenker-Achse
Verbundlenker- oder Koppellenker Achsen
Längslenker / Schräglenker / und Starrachsen

In der Regel wird nur eine Achse - die Vorderachse - gelenkt; Hinterachsen werden teilweise mitlenkend ausgeführt, kommen aber in der Praxis selten zum Einsatz. Eine aktiv lenkende Hinterachse, die einen ähnlich großen Lenkwinkel wie die Vorderachse ermöglicht, ist nur in einzelnen Sonderlösungen und nicht in der Großserie zu finden. Der maximal mögliche Lenkwinkel an der Vorderachse ist durch die Geometrie der gewählten Radaufhängung begrenzt. Ein Nachteil des begrenzten Lenkwinkels bekannter Radaufhängungen ist beispielsweise darin zu sehen, dass ein Fahrzeug, das parallel zu einer Straße einparkt, eine relativ große Parklücke zum Rangieren benötigt, die Ausnutzung des immer mehr begrenzt vorhandenen Parkraums also nicht optimal ist. Durch das meist erforderliche Rückwärts-Einparken wird zudem der fließende Verkehr behindert oder gestoppt. Ebenso kann ein Fahrzeug nicht auf der Stelle drehen. Je nach Fahrzeugklasse liegt der Wendekreis zwischen 9 und 13 Metern.

JP 2009 090698 A (NISSAN MOTOR) 30. April 2009 (2009-04-30),
WO 2016/039312 A1 (NTN TOYO BEARING CO LTD [JP]) 17. März 2016 (2016-03-17),
JP H01 172066 A (AISIN AW CO) 6. Juli 1989 (1989-07-06) und DE 10 2015 209595 A1
(BOSCH GMBH ROBERT AUTOMOTIVE STEERING [DE]; ZAHNRADFABRIK FRIEDRICHSHA)
1. Dezember 2016 (2016-12-01) offenbaren jeweils eine Radaufhängung für ein Fahrzeugfahrwerk, die einen das Rad tragenden Achsschenkel mit einer Lenkachse für das Rad, welche dessen Einschlag in einem vorgegebenen Bereich erlaubt, und Komponenten zur Verbindung des Schenkels mit der Tragstruktur aufweist, von denen mindestens eine eine zweite Lenkachse hat, um einen anderen als den durch die erste Achse definierten Radeinschlag herzustellen.

Ausgehend hiervon besteht die Aufgabe der vorliegenden Erfindung darin, den für Fahrzeuge benötigten Parkraum zu reduzieren und ein weitgehend exaktes, platzsparendes und automatisiertes Einparken quer und mit nur geringer Behinderung des fließenden Verkehrs durch eine geeignete Fahrwerksgeometrie zu ermöglichen.

Zur Lösung dieser Aufgabe wird die in Patentanspruch 1 angegebene Merkmalskombination vorgeschlagen. Vorteilhafte Ausgestaltungen und Weiterbildungen der Erfindung ergeben sich aus den abhängigen Ansprüchen.

Zum Beispiel ist denkbar, den radindividuellen Lenkeinschlags auf 90° (oder mehr) rechts und links gleichermaßen durch Integration einer zusätzlichen zweiten Drehachse in eine konventionelle, lenkbare Radaufhängung zwischen der Drehlagerung eines Achsschenkels und der Anbindung der Radaufhängung am Fahrzeug oder Transportmittels zu vergrößern. Zum Beispiel wird daher vorgeschlagen, dass mindestens eine der Komponenten eine wahlweise freigebbare zweite Lenkachse aufweist, um einen anderen als den durch die erste Lenkachse definierten Radeinschlag herzustellen.

Auch wenn die Erfindung im Folgenden anhand eines Fahrzeugfahrwerks beschrieben wird, ist das Anwendungsgebiet der Erfindung nicht darauf beschränkt. Diese Lösung kann neben einem Einsatz in der Fahrzeugtechnik auch in jeder anderen mobilen Anwendung umgesetzt werden. So ist z.B. ein Einsatz generell bei der Beförderung von Gütern oder Personen denkbar. Als Beispiele sollen hier insbesondere genannt werden: Nutzfahrzeuge und Transportmittel für behinderte Personen oder Fahrzeuge für die Logistik in speziellen Umgebungen wie z.B. Lagerräumen. Fahrzeuge können in Innenräumen eingesetzt werden und mit speziellen Aufbauten als flexibler Hebekran, Gabellift, Fließbandtransporter (Karosserie wird auf dem Fahrzeug transportiert), und dergleichen ausgebildet sein.

Im reinen Fahrbetrieb eines Fahrzeugs erfolgt die Führung des Fahrzeugs konventionell über feine Drehbewegungen der äußeren, dem Achsschenkel zugeordneten Lenkachse (ca. 40° Lenkeinschlag in beiden Richtungen). Zum Einparken oder Querfahren bei geringerer Geschwindigkeit wird die zweite, innenliegende, also karosserieseitige, Lenkachse aus der Fahrstellung entriegelt und vergrößert den Gesamtlenkeinschlag durch Überlagerung der Drehwinkel aus beiden Achsen bis zu einem Radeinschlag quer zur Längsrichtung des Fahrzeugs.

Diese Art der Radaufhängung kann sowohl nur an der Vorderachse, als auch an allen anderen Fahrzeugachsen zugleich eingesetzt werden (Allradlenkung). Die Ansteuerung der Lenkung über die zweite, innenliegende Lenkachse kann sowohl an der einzelnen Radaufhängung erfolgen (Einzelradlenkung über entsprechende Aktuatoren) als auch über eine Lenkkinematik, die beide Räder einer Achse koppelt und durch nur einen Aktuator angetrieben wird.

Die Ermöglichung eines Lenkeinschlags bis zu 90° oder mehr in beide Richtungen über eine zusätzliche, innere Lenkachse bietet zwei wesentliche Vorteile:
- Der Lenkrollradius (Abstand Aufstandspunkt Rad zu theoretischem Schnittpunkt von Lenkachse außen und Fahrbahn) kann klein oder auf null ausgelegt werden; der Einfluss von Antriebs- oder Bremsmomenten auf die Lenkung im Fahrbetrieb werden so sehr gering.
- Durch eine geeignete Wahl der Position der zweiten, inneren Lenkachse dreht das Rad parallel zum Querlenker auf kleinstmöglichem Raum ins Radhaus; der Radauschnitt muss nicht vergrößert werden, dies ergibt eine raumsparende Anordnung und es bleiben mehr Designfreiheiten. Zusätzlich zu einer konventionellen Doppelquerlenkerachse wird zum Beispiel ein weiteres Gelenk mit sechs Freiheitsgraden (z.B. ein Traggelenk) zwischen der Drehlagerung des Achsschenkels und der Anbindung der Radaufhängung am Fahrzeug oder Transportmittel eingebracht und trennt so den Querlenker in einen äußeren kurzen und einen inneren langen Querlenker. Die Lagerung der ersten, äußeren Lenkachse wird durch eine reine Drehlagerung ersetzt (z.B. Kegelrollenlager). Die Lagerung zwischen kurzem und langem Querlenker übernimmt zusätzlich zur Drehung um die zweite, innere Lenkachse die Aufgabe die Federung der Radaufhängung zu ermöglichen und muss deshalb mit sechs Freiheitsgraden ausgestattet sein.

Die Umsetzung erfolgt dadurch, dass der obere und der untere kurze Querlenker einteilig ausgeführt werden, oder durch ein Verbindungsstück als eine Einheit gekoppelt sind. Die Feder-Dämpfereinheit ist auf dem inneren, langen Querlenker drehbar gelagert und stützt sich direkt an der Karosserie ab. In bevorzugter Ausgestaltung der Erfindung ist an dem Achsschenkel ein Aktuator für die Drehung des Rads um die erste Lenkachse angeordnet. Der Aktuator kann als Elektromotor oder als Hydraulik-oder Pneumatikaggregat ausgebildet sein. Eine mechanisch sehr aufwendige Übertragung von Lenkbefehlen mittels eines herkömmlichen Lenkgetriebes kann damit vermieden werden. Erfindungsgemäß sind die Komponenten zur Verbindung des Achsschenkels mit der Tragstruktur als Doppelquerlenker-Achse ausgebildet und an tragstrukturseitigen Endbereichen eines oberen und eines unteren Querlenkers der Doppelquerlenker-Achse ein um die zweite Lenkachse schwenkbares Tragrohr für die Querlenker angeordnet.

Da die zweite Lenkachse bevorzugt nicht im normalen Fahrbetrieb bei höheren Geschwindigkeiten zum Einsatz kommen soll, weist sie zweckmäßig einen über ein mechanisches, elektrisches, hydraulisches oder pneumatisches Betätigungsorgan freigebbaren Sperrmechanismus auf.

Da auch die Übertragung von Antriebskräften auf das Rad bei der erfindungsgemäßen Radaufhängung mechanisch sehr aufwendig wäre, ist bevorzugt an dem Rad ein Radnabenmotor als Antrieb angeordnet.

Die erfindungsgemäße Radaufhängung erlaubt in weiterer Ausgestaltung zusätzliche oder alternative Funktionen und Anwendungen:
- Entfall Lenkaktuator an der inneren Achse: Der obere, kurze Querlenker entfällt. Durch Sperren und Öffnen des unteren Zwischengelenks kann der zusätzlich erforderliche Lenkwinkel auf 90° zur Fahrt nur durch den Radantrieb erfolgen.
- Reduzierung der Spurweite: Durch gleichen, aber gegenläufigen Lenkeinschlag beider Lenkachsen (40° nach links äußere Achse, 40° nach rechts innere Achse) hebt sich die Lenkwirkung auf; die Spurweite verringert sich.
- Redundante Bremse / Notbremsung: Unter Umständen kann auf eine zusätzliche mechanische Bremse verzichtet werden oder ein Bremsenausfall durch die Lenkung kompensiert werden. Die Betriebsbremsung erfolgt über den Radnabenmotor (Rekuperationsbremse); eine Notbremsung wird zusätzlich durch ein Verstellen der Räder in Vorspur unterstützt. Oder im Ausfall der Bremse durch ein gegenseitiges Lenken der Räder ein Bremsmoment erzeugt.
- An der Lagerung der inneren Drehachse werden die Kräfte und Momente gemessen und auf die Kräfte und Momente am Rad rückgeschlossen. Mit Hilfe einer Auswerteelektronik werden dann Betriebsfälle, Lastkollektive, Beschaffenheit des Untergrunds, Reifenkenndaten und der Reibwert als relevante Fahrzeugkennwerte ermittelt.

Im Folgenden wird die Erfindung anhand eines in der Zeichnung in schematischer Weise dargestellten Ausführungsbeispiels näher erläutert. Es zeigen
Fig. 1 ein Beispiel einer Radaufhängung mit Doppelquerlenkern in perspektivischer Ansicht;
Fig. 2 die Radaufhängung gemäß Fig. 1 in einer um 90° gedrehten perspektivischen Ansicht;
Fig. 3 bis 5 die Radaufhängung gemäß Fig. 1 in Ansicht von oben;
Fig. 6 eine schematische Seitenansicht der Radaufhängung germäß Fig. 1;
Fig. 7 bis 9 Ansichten von oben auf eine Ausführungsform einer Radaufhängung mit Doppelquerlenkern;
Fig. 10 eine schematische Seitenansicht der Radaufhängung gemäß den Fig. 7 bis 9;

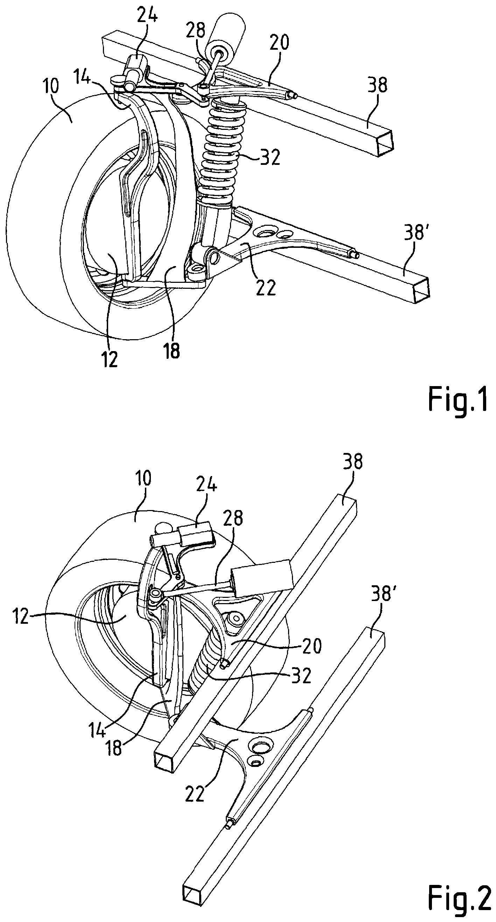

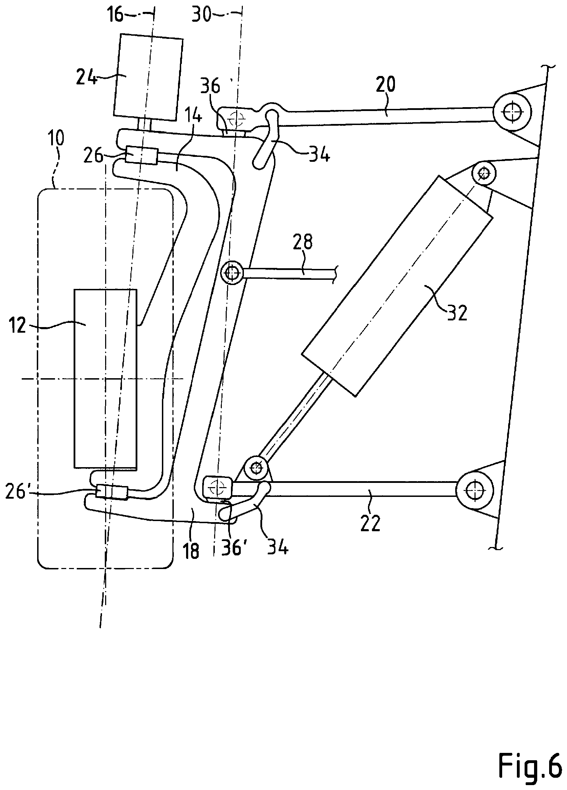

Die in Fig. 1 und 2 dargestellte Radaufhängung umfasst im Wesentlichen ein Rad 10 mit einem als Radnabenmotor ausgebildeten Radträger 12, einen das Rad tragenden Achsschenkel 14 mit einer ersten Lenkachse 16 (Fig. 6), einen Träger 18 für den Achsschenkel 14, einen oberen Dreiecksquerlenker 20, einen unteren Dreiecksquerlenker 22, einen an dem Achsschenkel 14 angeordneten Aktuator 24 für die Lenkung des Rads 10 um die erste Lenkachse 16, zwischen dem Achsschenkel 14 und dem Träger 18 oben und unten angeordnete Kegelrollenlager 26, 26', einen Lenker 28 zum Drehen des Trägers 18 um eine zweite Lenkachse 30 (Fig. 6), eine Feder-Dämpfereinheit 32, einen Sperrmechanismus 34 zum Sperren der zweiten Lenkachse 30 im Fahrbetrieb, sowie oben und unten zwischen dem Träger 18 und den Dreiecksquerlenkern 20, 22 angeordnete Traglager 36, 36' (Fig. 6). Ein Fahrzeugchassis ist symbolisch durch Streben 38, 38' angedeutet, an denen die oberen und unteren Dreiecksquerlenker 20, 22 schwenkbar befestigt sind. In den Fig. 1 und 2 ist das Rad 10 sowohl um die erste Lenkachse 16 als auch die zweite Lenkachse 30 gedreht, so dass ein Gesamtlenkwinkel von etwa 90° bezüglich einer Fahrzeuglängsrichtung erreicht wird. Ein Fahrzeug kann, soweit alle vorhandenen Räder derart eingelenkt sind, beispielsweise zum Einparken quer zu einer Straße verfahren werden.

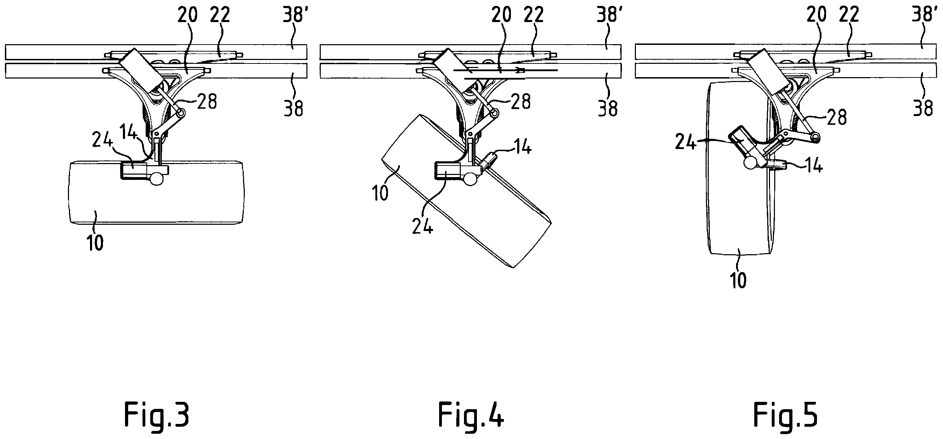

Fig. 3 zeigt das Rad 10 in einer geradeaus in Fahrtrichtung weisender Stellung. Fig. 4 zeigt das Rad 10 mit einem maximalen Lenkeinschlag von etwa 40° um die erste Lenkachse 16, beispielsweise bei einer Kurvenfahrt. Die zweite Lenkachse 30 ist hier gesperrt. Fig. 5 zeigt das Rad 10 um etwa 90° bezüglich der Fahrzeuglängsachse eingeschlagen. Die zweite Lenkachse 30 ist hier entsperrt und deren Drehwinkel addiert sich zu dem Drehwinkel der ersten Lenkachse 16.

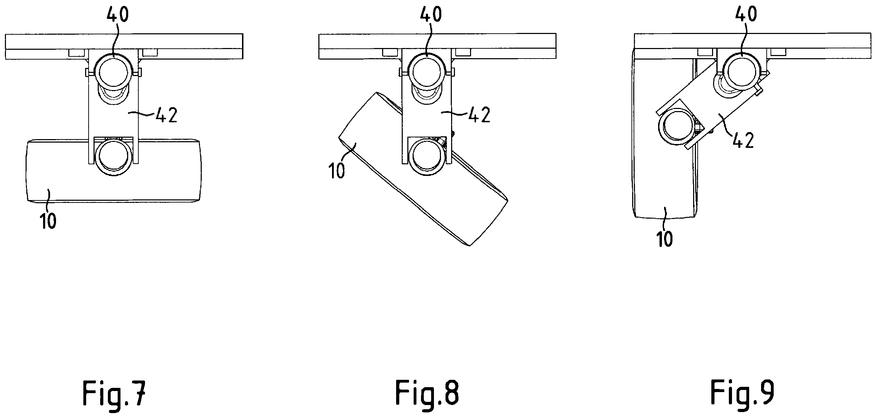

Die Fig. 7 bis 9 zeigen eine Draufsicht auf eine Variante einer Doppelquerlenker-Achse, bei der statt eines Trägers 18 für den Achsschenkel 14 (Fig. 1 bis 6) ein an den chassisseitigen Enden der oberen und unteren Querlenker 42, 44 angeordnetes Tragrohr 40 die zweite Lenkachse 30 beinhaltet. Die Fig. 7 bis 9 entsprechen jeweils den Fig. 3 bis 5. In Fig. 7 weist das Rad 10 geradeaus in Fahrtrichtung, in Fig. 8 ist das Rad 10 um die erste Lenkachse 16 geschwenkt und in Fig. 9 ist das Rad 10 sowohl um die erste Lenkachse 16 als auch um die zweite Lenkachse 30 verschwenkt und steht in einem Winkel von etwa 90° zur Fahrzeuglängsachse.

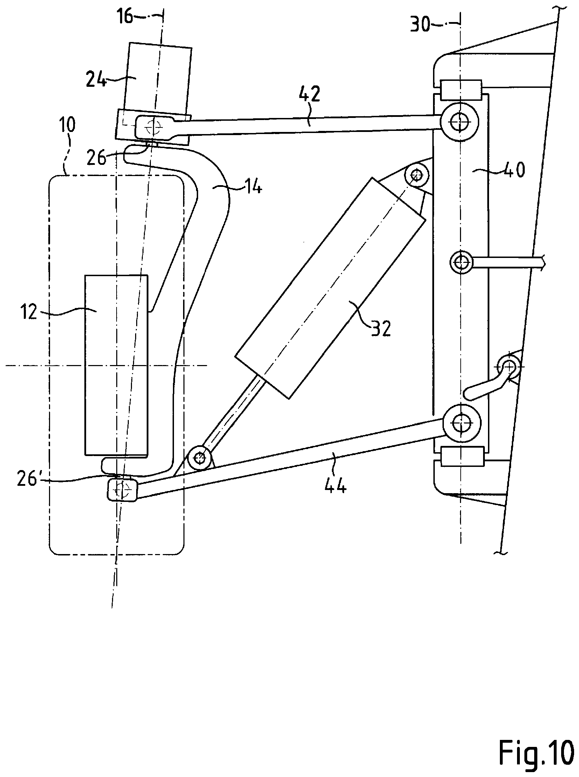

Fig. 10 zeigt eine schematische Seitenansicht der in den Fig. 7 bis 9 dargestellten Variante, entsprechend Fig. 6. Gleiche Teile sind hier mit den gleichen Bezugszeichen versehen. Der Unterschied besteht hier im Wesentlichen durch die Verwendung des Tragrohrs 40 als Träger für die oberen und unteren Querlenker 42, 44. Die zweite Lenkachse 30 verläuft nahe am Fahrzeugchassis durch das Tragrohr 40. Soweit keine hindernden Fahrzeugbauteile im Weg sind, erlaubt diese Variante theoretisch eine Lenkdrehung des Rads 10 um 360°.

## Patentansprüche

1. Radaufhängung, insbesondere für ein Fahrzeugfahrwerk, mit einem ein Rad (10) tragenden, eine erste Lenkachse (16, 52, 64) für das Rad (10) aufweisenden Achsschenkel (14, 46, 66), wobei die erste Lenkachse (16, 52, 64) einen Radeinschlag in einem vorgegebenen Bereich erlaubt, und mit Komponenten (18, 20, 22; 40, 42, 44; 48, 56; 56, 74) zur Verbindung des Achsschenkels (14, 46, 66) mit einer Tragstruktur (38, 38'), wobei mindestens eine der Komponenten (18, 20, 22; 40, 42, 44; 48, 56; 56, 74) eine zweite Lenkachse (30, 60, 70) aufweist, um einen anderen als den durch die erste Lenkachse (16, 52, 64) definierten Radeinschlag herzustellen, die zweite Lenkachse (30, 60, 70) wahlweise freigebbar ist und die Komponenten (18, 20, 22; 40, 42, 44) zur Verbindung des Achsschenkels (14, 46, 66) mit der Tragstruktur (38, 38') als Doppelquerlenker-Achse ausgebildet sind, **dadurch gekennzeichnet, dass** an tragstrukturseitigen Endbereichen eines oberen und eines unteren Querlenkers (42, 44) der Doppelquerlenker-Achse ein um die zweite Lenkachse (30) schwenkbares Tragrohr (40) für die Querlenker (42, 44) angeordnet ist.

2. Radaufhängung nach Anspruch 1, **dadurch gekennzeichnet, dass** an dem Achsschenkel (14, 46, 66) ein Aktuator (24, 78) für die Drehung des Rads (10) um die erste Lenkachse (16, 52, 64) angeordnet ist.

3. Radaufhängung nach Anspruch 2, **dadurch gekennzeichnet, dass** der Aktuator (24, 78) als Elektromotor oder als Hydraulik- oder Pneumatikaggregat ausgebildet ist.

4. Radaufhängung nach einem der Ansprüche 1 bis 3, **dadurch gekennzeichnet, dass** die zweite Lenkachse (30, 60, 70) einen über ein mechanisches, elektrisches, hydraulisches oder pneumatisches Betätigungsorgan freigebbaren Sperrmechanismus (34, 58, 76) aufweist.

5. Radaufhängung nach einem der Ansprüche 1 bis 4, **dadurch gekennzeichnet, dass** an dem Rad (10) ein Radnabenmotor als Antrieb angeordnet ist.

## Claims

1. Wheel suspension, in particular for a vehicle body, comprising an axle limb (14, 46, 66) which supports a wheel (10) and has a first steering axle (16, 52, 64) for the wheel (10), said first steering axle (16, 52, 64) allowing a steering angle in a specified range, and comprising components (18, 20, 22; 40, 42, 44; 48, 56; 56, 74) for connecting the axle limb (14, 46, 66) to a support structure (38, 38'), wherein at least one of the components (18, 20, 22; 40, 42, 44; 48, 56; 56, 74) has a second steering axle (30, 60, 70) in order to produce a steering angle other than the one defined by the first steering axle (16, 52, 64), **characterized in that** the second steering axle (30, 60, 70) is selectively releasable, the components (18, 20, 22; 40, 42, 44) for connecting the axle limb (14, 46, 66) to the support structure (38, 38') form a double transverse link axle, and, at chassis-side end portions of an upper and a lower arm (42, 44) of the double transverse link axle, a support tube (40) pivotable about the second steering axle (30) is arranged.

2. Wheel suspension according to claim 1, **characterized in that** an actuator (24, 78) for rotating the wheel (10) about the first steering axle (16, 52, 64) is arranged on the axle limb (14, 46, 66).

3. Wheel suspension according to claim 2, **characterized in that** the actuator (24, 78) is designed as an electric motor or as a hydraulic or pneumatic unit.

4. Wheel suspension according to one of claims 1 to 3, **characterized in that** the second steering axle (30, 60, 70) has a locking mechanism (34, 58, 76) releasable via a mechanical, electrical, hydraulic, or pneumatic actuator.

5. Wheel suspension according to one of claims 1 to 4, **characterized in that** a wheel hub motor is arranged on the wheel (10) as a drive.

## Revendications

1. Suspension de roue, en particulier pour un châssis de véhicule, avec une fusée d'essieu (14, 46, 66) qui porte une roue (10) et présente un premier essieu directeur (16, 52, 64) pour la roue (10), le premier essieu directeur (16, 52, 64) permettant un angle de roue dans un domaine prédéterminé, et avec des composants (18, 20, 22; 40, 42, 44; 48, 56; 56, 74) pour relier la fusée d'essieu (14, 46, 66) à une structure de support (38, 38'), dans laquelle au moins l'un des composants (18, 20, 22; 40, 42, 44; 48, 56; 56, 74) présente un deuxième essieu directeur (30, 60, 70) pour fournir un angle de roue autre que l'angle de roue défini par le premier essieu directeur (16, 52, 64), le deuxième essieu directeur (30, 60, 70) est sélectivement libérable, et les composants (18, 20, 22; 40, 42, 44; 48, 56; 56, 74) sont adaptés pour relier la fusée d'essieu (14, 46, 66) à la structure de support (38, 38') en forme d'axe à double triangle, **caractérisé en ce que**, dans des zones d'extrémité d'un triangle supérieur et d'un triangle inférieur (42, 44) de l'axe à double triangle, du côté de la structure de support, est disposé un tube de support (40) pour les triangles (42, 44) pouvant pivoter autour du deuxième essieu directeur (30).

2. Suspension de roue selon la revendication 1, **caractérisée en ce qu'**un actionneur (24, 78) pour la rotation de la roue (10) autour du premier essieu directeur (16, 52, 64) est disposé sur la fusée d'essieu (14, 46, 66).

3. Suspension de roue selon la revendication 2, **caractérisée en ce que** l'actionneur (24, 78) est conçu comme un moteur électrique ou comme une unité hydraulique ou pneumatique.

4. Suspension de roue selon l'une des revendications 1 à 3, **caractérisée en ce que** le deuxième essieu directeur (30, 60, 70) possède un mécanisme de blocage (34, 58, 76) libérable par un organe d'actionnement mécanique, électrique, hydraulique ou pneumatique.

5. Suspension de roue selon l'une des revendications 1 à 4, **caractérisée en ce qu'**un moteur de moyeu de roue est disposé sur la roue (10) en tant qu'entraînement.
